# EUROPEAN PATENT APPLICATION

(11) **EP 2 434 383 A2**
(43) Date of publication of application: **28.03.2012**
(21) Application number: 11156243.5
(22) Date of filing: 28.02.2011
(51) Int. Cl.: G06F 3/048

(54) **Communication device**

(30) Priority: 27.09.2010 US 386699
(71) Applicant: RESEARCH IN MOTION LIMITED, Waterloo, Ontario N2L 3W8 (CA); Research in Motion Corporation, Irving, TX 75039 (US); QNX Software Systems, Ottawa ON K2M 1W8 (CA)
(72) Inventor: Dodge, Danny, Thomas, Ottawa Ontario K2M 1W8 (CA); Lazaridis, Mihal, Waterloo Ontario N2L 3W8 (CA); Lindsay, Donald, James, Waterloo Ontario N2L 3W8 (CA)
(74) Representative: MERH-IP Matias Erny Reichl Hoffmann

(57) **Abstract**

According to embodiments described in the specification, a method and apparatus for controlling a display of a mobile electronic device is provided. The device comprises: a memory for maintaining status data and application data; an input device; a display; and, a processor interconnected with the memory, the input device and the display, the processor configured to control the display to provide a first interface comprising a representation of the application data; the processor further configured to receive input data representative of a peek command from the input device; and, the processor further configured to control the display to provide a second interface comprising a representation of a portion of the application data, and a representation of the status data.

## Description

### FIELD

The specification relates generally to mobile electronic devices, and specifically to a method and apparatus for controlling a display of a mobile electronic device.

### BACKGROUND

As mobile electronic devices become more powerful, the functionality provided by such devices continues to expand and improve. Improvements in display space, however, are more difficult to achieve, as stringent size constraints are often imposed on mobile electronic devices. These constraints limit the amount of information which can be presented at any given time on the display of a mobile electronic device, and can result in the inefficient use of the mobile electronic device's resources.

### GENERAL

According to a further aspect of the present disclosure, a mobile electronic device is provided. The mobile electronic device comprises: a memory for maintaining status data and application data; an input device; a display; and, a processor interconnected with the memory, the input device and the display, the processor configured to control the display to provide a first interface comprising a representation of the application data; the processor further configured to receive input data representative of a peek command from the input device; and, the processor further configured to control the display to provide a second interface comprising a representation of a portion of the application data, and a representation of the status data.

According to an aspect of the present disclosure, a method of controlling a display of a mobile electronic device is provided. The method comprises: maintaining status data and application data in a memory of the mobile electronic device; controlling the display to provide a first interface comprising a representation of the application data; receiving input data representative of a peek command; and, controlling the display to provide a second interface comprising a representation of a portion of the application data, and a representation of the status data.

According to another aspect of the present disclosure, a non-transitory computer readable storage medium is provided. The computer readable storage medium stores computer readable instructions for execution by a processor. The computer readable instructions implement the above method.

### BRIEF DESCRIPTIONS OF THE DRAWINGS

Embodiments are described with reference to the following figures, in which:

Figure 1 depicts a mobile electronic device, according to a non-limiting embodiment;

Figure 2 depicts certain internal components of the mobile electronic device of Figure 1, according to a non-limiting embodiment;

Figure 3 depicts a set of status data records maintained by the mobile electronic device of Figure 1, according to a non-limiting embodiment;

Figure 4 depicts a method of controlling a display of the mobile electronic device of Figure 1, according to a non-limiting embodiment;

Figure 5 depicts a performance of block 410 of the method of Figure 4, according to a non-limiting embodiment;

Figure 6 depicts a performance of block 415 of the method of Figure 4, according to a non-limiting embodiment;

Figure 7 depicts a performance of block 420 of the method of Figure 4, according to a non-limiting embodiment; and

Figure 8 depicts a method of controlling a display of the mobile electronic device of Figure 1, according to another non-limiting embodiment.

### DETAILED DESCRIPTION OF THE EMBODIMENTS

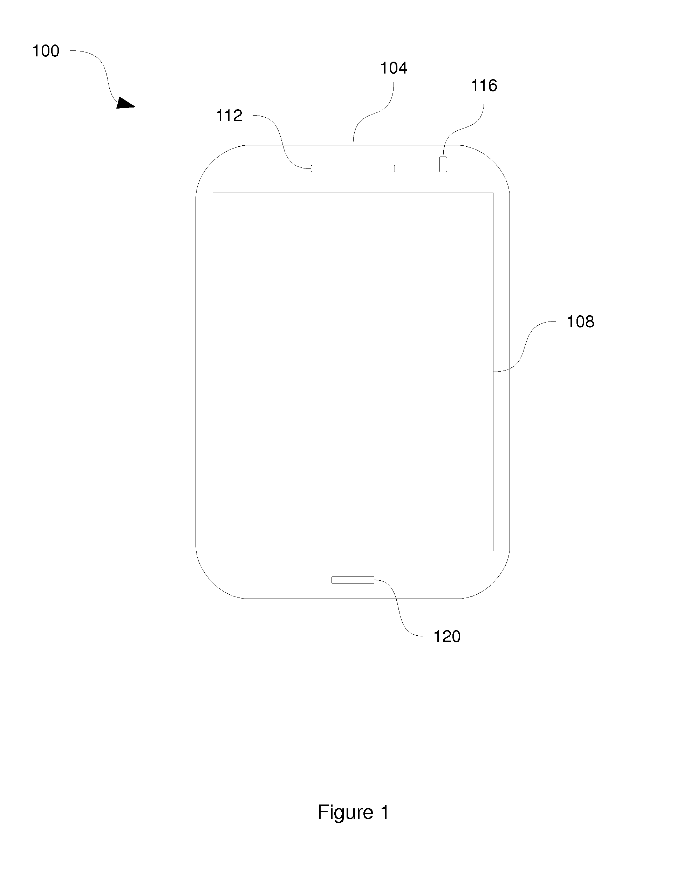

Figure 1 depicts a mobile electronic device 100, which in the present embodiment is based on the computing environment and functionality of a handheld wireless communication device, such as a tablet computer. It will be understood, however, that mobile electronic device 100 is not limited to a handheld wireless communication device. Other mobile electronic devices are also contemplated, such as cellular telephones, smart telephones, Personal Digital Assistants ("PDAs"), media or MP3 players, laptop computers and the like.

Mobile electronic device 100 includes a housing 104 which supports the various other components of mobile electronic device 100. Housing 104 can be constructed of any suitable material, or combination of materials, including without limitation plastics (e.g. Polycarbonate/Acrylonitrile Butadiene Styrene ("PC/ABS")) and metals (e.g. aluminum).

Mobile electronic device 100 also includes one or more output devices, including without limitation a display 108, a speaker 112 and a Light Emitting Diode ("LED") indicator 116. Mobile electronic device 100 additionally includes one or more input devices, including without limitation a microphone 120 and a touch screen device integrated with display 108. In some embodiments (not shown), other combinations of input and output devices can be provided. For example, in some non-limiting embodiments a further input device or combination of input devices can be provided in the form of a trackball, a touchpad, a keypad or any combination thereof. Such further input devices can be provided in addition to, or instead of, the touch screen input device integrated with display 108.

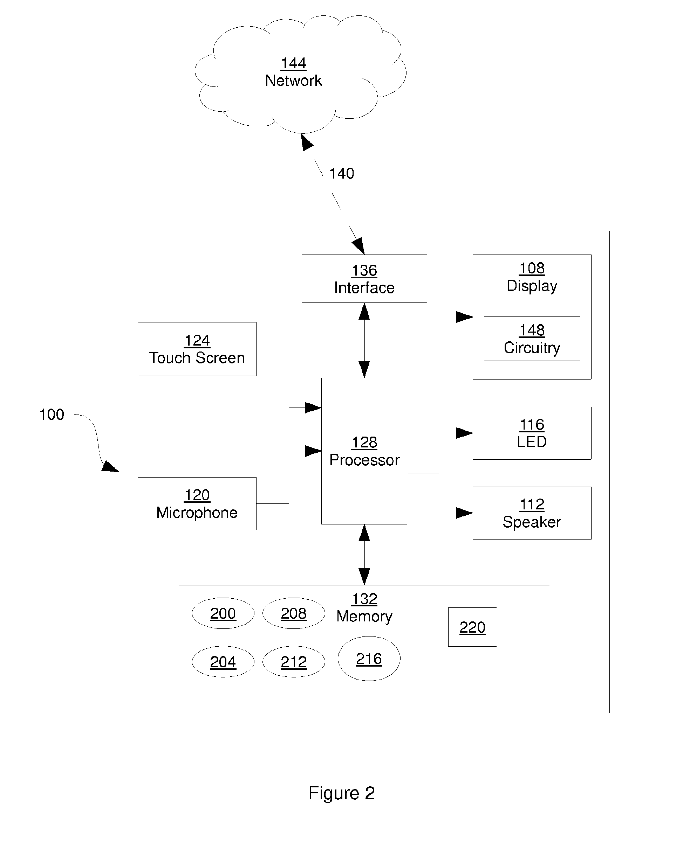

Referring now to Figure 2, certain internal components of mobile electronic device 100 are shown. In addition to display 108, speaker 112, LED 116 and microphone 120, touch screen device 124 is shown, as well as a processor 128 interconnected with a non-transitory computer readable storage medium in the form of a memory 132. Memory 132 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory.

Mobile electronic device 100 also includes a communications interface 136 interconnected with processor 128. Communications interface 136 allows mobile electronic device 100 to communicate with other devices via, for example, a link 140 and a network 144. Network 144 can include any suitable combination of wired networks, wireless networks or both, including but not limited to a Wide Area Network ("WAN") such as the Internet, a Local Area Network ("LAN"), cell phone networks, WiFi networks, WiMax networks and the like. Link 140 is compatible with network 144. In particular, link 140 can be a wireless link based on Global System for Mobile communications ("GSM"), General Packet Radio Service ("GPRS"), Enhanced Data rates for GSM Evolution ("EDGE"), and the third-generation mobile communication system (3G), Institute of Electrical and Electronic Engineers ("IEEE") 802.11 (WiFi) or other wireless protocols. Link 140 can also include any base stations and backhaul links necessary to connect mobile electronic device 100 to network 144. Communications interface 136 is therefore selected for compatibility with link 140 as well as with network 144. In some embodiments, network 144 can be omitted, and link 140 can be a short-range wireless link such as a Bluetooth™ link and the like. In still other embodiments, link 140 can be a short-range wired link, such as a Universal Serial Bus ("USB") link.

As also seen in Figure 2, display 108 includes display circuitry 148 controllable by processor 128. Display 108 includes a flat panel display (e.g. Liquid Crystal Display (LCD), plasma display, Organic Light Emitting Diode (OLED) display). Circuitry 148 thus includes any suitable combination of display buffers, transistors, LCD cells, plasma cells, phosphors, and the like. In general, circuitry 148 of display 108 is controllable by processor 128 to generate interfaces on display 108 comprising representations of data stored in memory 132. For example, such interfaces can include representations of various applications maintained by mobile electronic device 100, as will be discussed in greater detail below.

The various components of mobile electronic device 100 are interconnected, for example via a communication bus. Mobile electronic device 100 is powered by a battery (not shown). In some non-limiting embodiments, mobile electronic device 100 can be supplied, in addition to or instead of the battery, with electricity by a wired connection to a wall outlet or other power source.

Still referring to Figure 2, mobile electronic device 100 maintains, in memory 132, a plurality of applications. Each application comprises computer-readable instructions for execution by processor 128. In the present example embodiment, memory 132 stores an address book application 200, a map application 204, a web browser application 208 and a messaging application 212. In other embodiments, a wide variety of other applications are also possible in addition to, or instead of, the above-mentioned applications. Mobile electronic device 100 also maintains in memory 132 an operating system ("OS") 216, which comprises computer-readable instructions executable by processor 128. Processor 128, via execution of OS 216, can be enabled to execute other ones of the applications in memory 132 and to manage the computing resources of mobile electronic device 100. Processor 128 can thus be configured to carry out various functions via execution of the computer-readable instructions of OS 216 and applications 200, 204, 208 and 212. Among the functions carried out by processor 128 is the controlling of display 108 to generate representations of the applications, as will be discussed below in greater detail.

Mobile electronic device 100 also maintains, in memory 132, status data 220. Status data 220 includes indications of various operating parameters of mobile electronic device 100. For example, status data 220 can include indications for one or more of the following: signal strength with network 144, the level of mobile electronic device 100's battery, the current time and date, the active notification profile, and a new message counter. Status data 220 can also include other indications, in addition to or instead of those mentioned above.

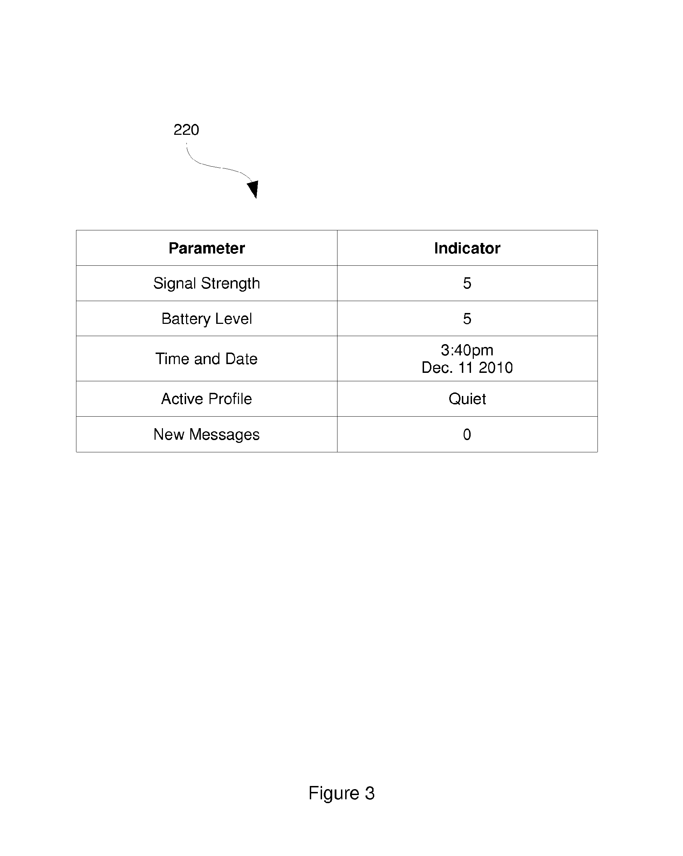

Referring briefly to Figure 3, an example of status data 220 as maintained in memory 132 is depicted in tabular format. The tabular format shown in Figure 3 is purely for illustrative purposes, and status data 220 can be maintained in memory 132 in any suitable format. The table shown in Figure 3 includes a record for each one of several operating parameters. Thus, the strength of the signal from network 144 is indicated as being "5" (for example, out of a maximum of 5 indicating excellent signal strength); the battery level is indicated as being "5" (for example, out of a maximum of 5 indicating a completely charged battery). The time and date are shown as being 3:40pm and December 11, 2010, respectively. The active notification profile is shown as being "Quiet" (indicating, for example, that no audible notification signals will be emitted by mobile electronic device 100 upon receipt of an incoming call or message). Further, the new message counter indicates that there are no new (i.e. unread) messages.

Processor 128 can be configured via execution of OS 216 to maintain status data 220 up to date. For example, status data 220 can be updated in memory 132 at any suitable regular interval.

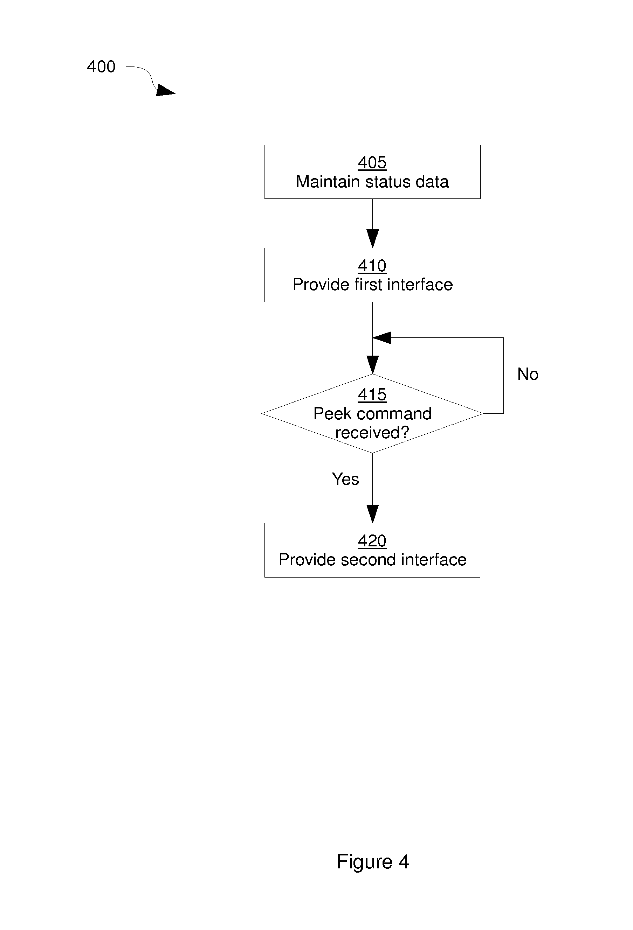

Referring now to Figure 4, a method 400 of controlling display 108 of mobile electronic device 100 is depicted. Although method 400 will be described in connection with its performance on mobile electronic device 100, method 400 can also be performed on other suitable devices.

Method 400 begins with the performance of block 405, at which processor 128 is configured to maintain status data 220 in memory 132, as discussed above. Status data 220 is maintained in memory 132 and updated at regular intervals throughout the performance of method 400.

Continuing with the performance of method 400, at block 410, processor 128 is configured to control display 108 (and particularly circuitry 148 of display 108) to provide a first interface. In general, in controlling display 108 to provide an interface, processor 128 retrieves data to be represented in the interface from memory 132, formats the data for use by display 108 and transmits the formatted data to display 108. Having received the formatted data and stored the formatted data in a display buffer included in circuitry 148, display 108 provides the interface.

The first interface provided at block 410 includes a representation of application data. That is, the first interface includes a representation of data maintained in memory 132 associated with one or more of the applications 200, 204, 208, 212 and 216 discussed above.

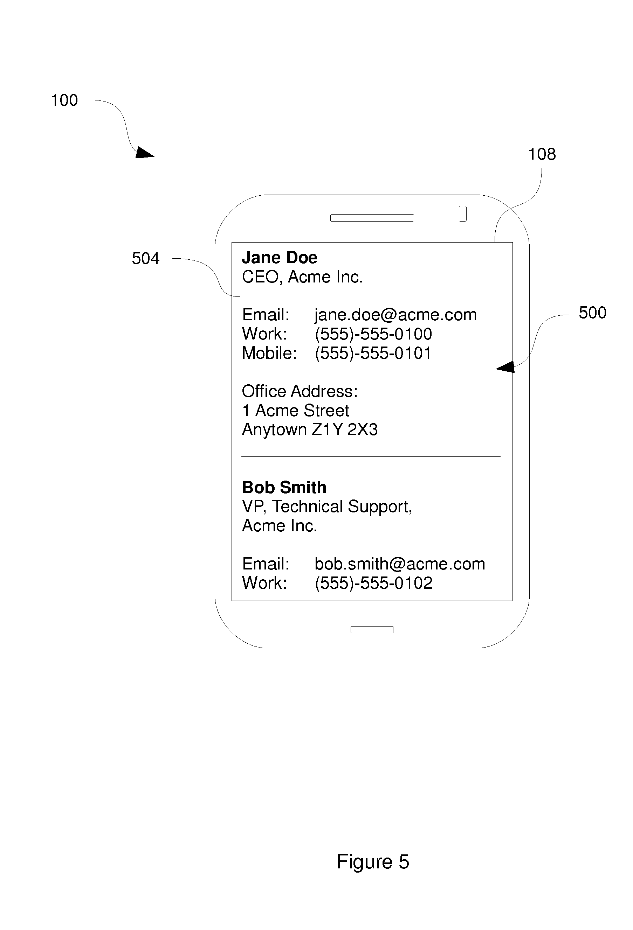

Turning to Figure 5, an example of a first interface 500 is shown provided on display 108. First interface 500 includes a representation 504 of data associated with address book application 200. In particular, the data represented by representation 504 includes contact data for contacts named "Jane Doe" and "Bob Smith". A representation of contact data is shown in Figure 5 purely for illustrative purposes. First interface 500 can include a representation of any application data, including without limitation icons for launching various applications and data associated with one of those applications (e.g. map application 204). In some embodiments, the representation of application data of the first interface can occupy substantially the entire area of display 108, as shown in Figure 5.

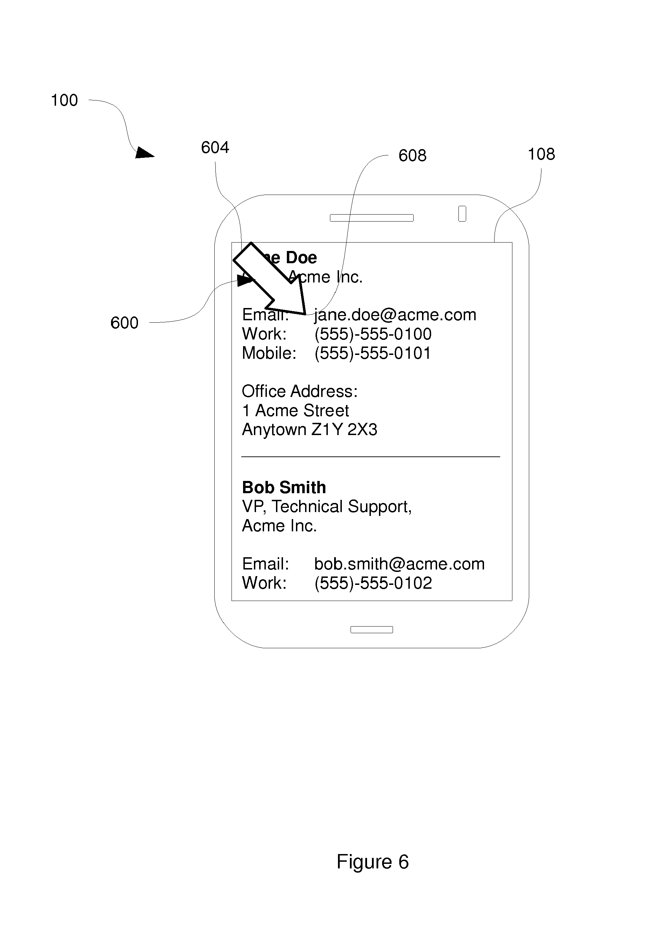

Referring again to Figure 4, performance of method 400 continues at block 415, at which processor 128 is configured to determine whether input data representative of a "peek" command has been received from touch screen device 124. In general, as will be described in greater detail below, a peek command is a command for causing processor 128 to reveal a representation of status data 220 on display 108. In the present example embodiment, the peek command comprises a swipe gesture received at touch screen 124. A swipe gesture is defined herein as a gesture in which contact is established with display 108 (and therefore with touch screen 124) at a first point, followed by a dragging motion across display 108 to a second point. In some embodiments, the peek command comprises a swipe gesture which begins at an upper corner of display 108 and travels inwardly at an angle of approximately 45°, towards the centre of display 108. Figure 6 shows an example swipe gesture which can be interpreted as a peek command. The gesture is represented in Figure 6 by an arrow 600, and begins at first end 604 of arrow 600 and ends at second end 608 of arrow 600.

The swipe gesture described above is received by touch screen 124. Touch screen 124 transmits data representative of the swipe gesture to processor 128. Processor 128 then determines that the swipe gesture is representative of a peek command.

The above-described swipe gesture is used as an example of an interaction with input devices of mobile electronic device 100 which can be interpreted by processor 128 as a peek command. It is contemplated, however, that a wide variety of other interactions can be interpreted as peek commands instead of, or in addition to, the above swipe gesture. For example, in some embodiments mobile electronic device 100 can include a keypad, and the depression of a particular combination of keys on the keypad can be interpreted by processor 128 as a peek command.

Returning to Figure 4, when processor 128 determines that no input data representative of a peek command has been received (for example, different input data or no input data may have been received), the determination at block 415 is negative and method 400 repeats the determination. When, on the other hand, the determination at block 415 is affirmative - that is, when the swipe gesture described above has been received at touch screen 124 - method 400 proceeds to block 420.

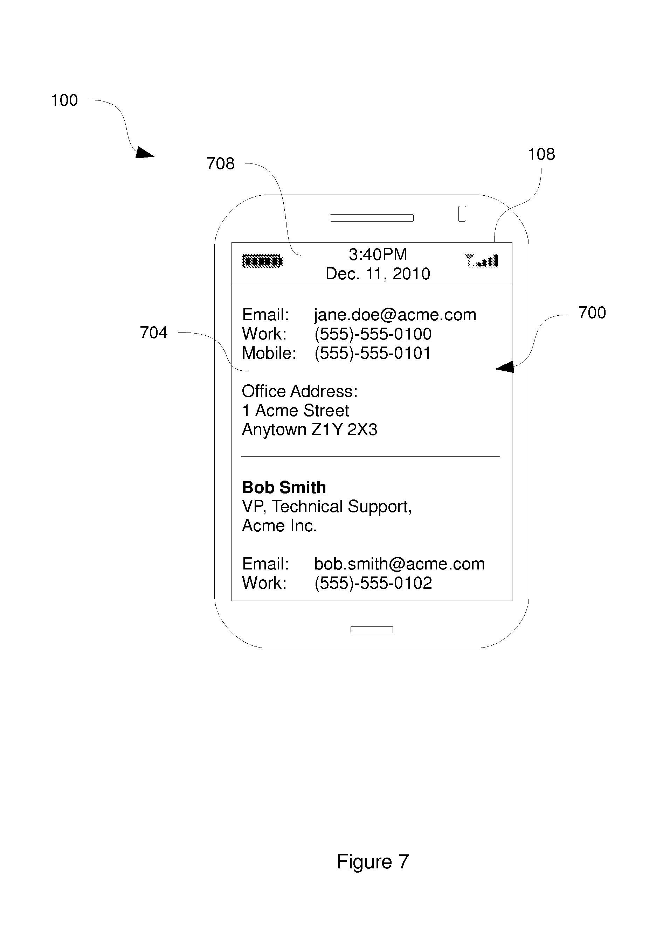

At block 420, processor 128 is configured to control display 108 to provide a second interface, in which a representation of status data is revealed on display 108. That is, the second interface includes a representation of a portion of the application data from the first interface, and a representation of the status data. Turning to Figure 7, an example of such a second interface 700 is shown. Second interface 700 includes a representation 704 of a portion of the contact data shown in representation 504. In the example of Figure 7, the portion of contact data indicating the name and position of Jane Doe has been omitted from representation 704. It is contemplated that when the peek command received at block 415 is a swipe gesture as described above and shown in Figure 6, the swipe gesture can originate proximate to the location in which the second interface will be provided. In other words, the second interface can be provided in a location proximal to the starting point of the swipe gesture.

Second interface 700 also includes a representation 708 of a portion of status data 220. In particular, the battery level, signal strength and current time and date are shown. Although not all the indicators of status data 220 are shown in Figure 7, it is contemplated that representation 708 can include all the indicators shown in Figure 3. In other embodiments, representation 708 can include any combination of status data indicators.

Thus, at block 420, display 108 is controlled by processor 128 to provide a second interface which omits a portion of the first interface and instead provides a representation of status data in response to the peek command received at block 415. Representation 704 occupies a smaller portion of the area of display 108 than representation 504. In some embodiments, representation 708 occupies 5 to 25 percent of the area of display 108, while representation 704 occupies the remainder of the area of display 108. In further embodiments, representation 708 occupies 10 to 15 percent of the area of display 108. In the example embodiment shown in Figure 7, representation 708 occupies approximately 12 percent of the area of display 108. It is contemplated that any other suitable division of the area of display 108 between representations 704 and 708 can be used.

It is contemplated that display 108 can be controlled to provide a wide variety of transitional interfaces between the first and second interfaces described above. For example, processor 128 can control display 108 to render a portion of the first interface transparent, thus revealing the representation of status data 220. In other example embodiments, display 108 can be controlled to reveal the representation of status data 220 by scrolling the representation of application data downwardly. Other transitions will also occur to those skilled in the art.

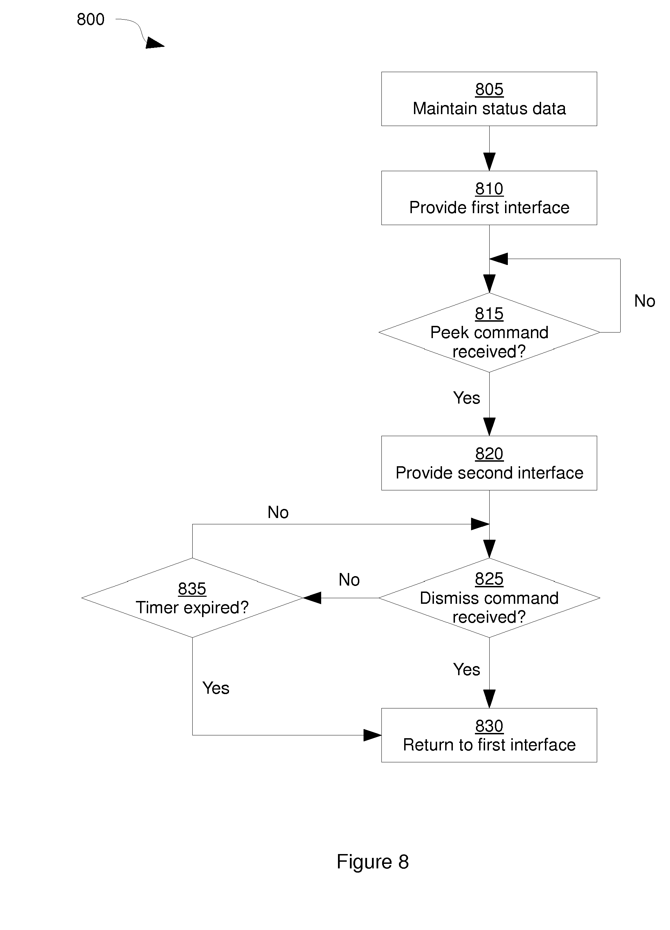

Referring now to Figure 8, a method 800 of controlling display 108 of mobile electronic device 100 according to another embodiment is depicted. Although method 800 will be described in connection with its performance on mobile electronic device 100, method 800 can also be performed on other suitable devices.

The performance of blocks 805, 810, 815 and 820 are as described above in connection with blocks 405, 410, 415 and 420, respectively. At block 825, which follows the performance of block 820, however, processor 128 is configured to make an additional determination. In particular, processor 128 is configured to determine whether input data representative of a "dismiss" command has been received from touch screen 124 or any other input device of mobile electronic device 100.

A dismiss command is a command for causing processor 128 to remove the previously revealed representation of status data 220 from display 108, thus reverting to an earlier interface and freeing up display area. In the present example embodiment, the dismiss command comprises a swipe gesture received at touch screen 124. The dismiss swipe gesture begins near the centre of display 108 and travels towards an upper corner of display 108 at an angle of approximately 45°. In other words, the dismiss command is a swipe gesture travelling in substantially the opposite direction as arrow 600 shown in Figure 6.

The dismiss swipe gesture is received by touch screen 124, and data representative of the swipe gesture is transmitted to processor 128. As discussed earlier in connection with the peek command, the dismiss command can comprise any of a variety of interactions with the input devices of mobile electronic device 100. For example, mobile electronic device 100 can include an exit key (not shown) which, when depressed, sends input data representative of a dismiss command to processor 128. In other embodiments, mobile electronic device 100 can include a keypad and the depression of a particular combination of keys on the keypad (different from the combination used to generate a peek command) can be interpreted by processor 128 as a dismiss command.

When the determination at block 825 is affirmative, method 800 proceeds to block 830. At block 830, processor 128 is configured to control display 108 to revert to the first interface, shown in Figure 5. That is, the representation of status data is removed from display 108 and the portion of application data omitted in representation 704 is restored to display 108.

If, on the other hand, the determination at block 825 is negative, method 800 proceeds to block 835, at which processor 128 is configured to determine whether a timer has expired. In some embodiments, processor 128 can maintain a timer which begins when the second interface is provided at block 820 and which expires after a predetermined length of time. The length of time after which the timer expires can be configurable, for example by way of a timer setting maintained in memory 132. In other embodiments, the timer can begin when a modification is made to status data 220 and expire after a predetermined length of time. As noted above, processor 128 is configured to update status data 220 at regular intervals. If, for example, a new message is received at mobile electronic device 100, status data 220 changes to indicate a new message count of one. Following such a modification of status data 220, the timer can begin. Processor 128 can then be configured to reset the timer whenever status data 220 changes prior to expiry of the timer. Thus, in such embodiments, the representation of status data 220 in the second interface provided at block 820 remains available on display 108 so long as there is activity (i.e. change) in connection with the status data.

When the determination at block 835 is negative, method 800 returns to block 825. When, on the other hand, the determination at block 835 is affirmative, indicating that the timer has expired, method 800 proceeds to block 830 as described above.

It is contemplated that following the completion of methods 400 or 800 as described above (that is, the completion of the performance of blocks 420 or 830), performance of methods 400 or 800 can be repeated at any time by receipt of a further peek command.

From the above description, certain advantages will now be apparent. For example, the omission of a representation of status data 220 from the first interface results in a greater portion of the area of display 108 being made available for representations of application data.

Thus, the strain on processor 128, display circuitry 148 and touch screen 124 can be reduced as a result of the reduced need for scrolling or otherwise refreshing the first interface to reveal all the relevant application data. As a further example, more effective use is made of display buffers within circuitry 148, as status data 220 is provided to such buffers only upon demand. At the same time, the availability of representations of status data 220 is not significantly reduced.

Further advantages will also occur to those skilled in the art. The particular peek command in the form of a swipe gesture, described above and shown in Figure 6, allows for further efficiencies in the allocation of the resources of mobile electronic device 100. For instance, the swipe gesture shown in Figure 6 is not dependent on any particular interface element being present on display 108, which would occupy a portion of the area of display 108 and lead to the strains mentioned above.

Other advantages may also occur to those skilled in the art.

It is contemplated that in some embodiments, the functionality of processor 128 as configured via execution of the above-mentioned applications can be implemented using pre-programmed hardware or firmware elements (e.g., application specific integrated circuits (ASlCs), electrically erasable programmable read-only memories (EEPROMs), etc.), or other related components. It is also contemplated that in some embodiments, the computer-readable instructions described above can be stored on non-transitory computer readable medium other than memory 132. Such computer-readable medium can include any combination of a removable diskette, a compact disk ("CD"), a digital video disk ("DVD"), a USB drive and the like.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A mobile electronic device (100), comprising:
a memory (132) for maintaining status data and application data;
an input device (120, 124);
a display (108); and,
a processor (128) interconnected with the memory (132), the input device (120, 124) and the display (108), the processor configured to control the display (108) to provide a first interface (500) comprising a representation (504) of the application data;
the processor (128) further configured to receive input data (415) representative of a peek command from the input device (120, 124); and,
the processor further configured to control the display (420) to provide a second interface (700) comprising a representation (704) of a portion of the application data, and a representation (708) of the status data.

2. The mobile electronic device (100) of claim 1, the processor (128) being further configured to determine whether a timer has expired (835); and when the determination is affirmative, to control the display (108) to provide the first interface (830).

3. The mobile electronic device (100) of claim 2, wherein the timer expires one of a predetermined length of time after provision of the second interface and a predetermined length of time after a change to the status data.

4. The mobile electronic device (100) of claim 1, the processor (128) being further configured to receive input data representative of a command to dismiss the representation of the status data from the input device (825); and to control the display (108) to provide the first interface.

5. The mobile electronic device (100) of any one of claims 1-4, wherein the input device (120, 124) comprises a touch screen (124).

6. The mobile electronic device (100) of claim 5, wherein the peek command comprises a swipe gesture (600).

7. The mobile electronic device (100) of claim 6, wherein the swipe gesture (600) begins at a corner of the touch screen (124).

8. The mobile electronic device (100) of claim 7, wherein the swipe gesture (600) begins (604) at an upper corner of the touch screen and travels (608) towards the centre of the touch screen.

9. The mobile electronic device (100) of any one of claims 5-8, wherein the touch screen (124) is integrated with the display (108).

10. The mobile electronic device of any one of claims 1-9, wherein the representation (504) of the application data occupies substantially the entire area of the display (108).

11. The mobile electronic device (100) of any one of claims 1-10, wherein the representation (708) of the status data occupies 5 to 25% of the area of the display (108).

12. The mobile electronic device (100) of claim 11, wherein the representation (708) of the status data occupies 10 to 15% of the area of the display (108).

13. The mobile electronic device (100) of any one of claims 1-12, wherein the status data includes at least one of signal strength, battery level, time and date, active profile, and new message indicator.

14. A method (400) of controlling a display (108) of a mobile electronic device (100), the method comprising:
maintaining (405) status data and application data in a memory (132) of the mobile electronic device (100);
controlling (410) the display (108) to provide a first interface (500) comprising a representation (504) of the application data;
receiving (415) input data representative of a peek command; and,
controlling (420) the display (108) to provide a second interface (700) comprising a representation (704) of a portion of the application data, and a representation (708) of the status data.

15. A non-transitory computer readable storage medium (132) for storing computer readable instructions for execution by a processor (128), the computer readable instructions implementing the method (400) of claim 14.
